(19) 

**Europäisches Patentamt**
**European Patent Office**
**Office européen des brevets**

(11) **EP 4 746 066 A1**

(12) **EUROPEAN PATENT APPLICATION**
published in accordance with Art. 153(4) EPC

(43) Date of publication:
20.05.2026 Bulletin 2026/21

(21) Application number: 24842356.8

(22) Date of filing: 15.07.2024

(51) International Patent Classification (IPC):
*H01M 4/136* (2010.01)　　*H01M 4/139* (2010.01)

(52) Cooperative Patent Classification (CPC):
Y02E 60/10

(86) International application number:
PCT/CN2024/105570

(87) International publication number:
WO 2025/016367 (23.01.2025 Gazette 2025/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 14.07.2023 CN 202310870083

(71) Applicant: SVOLT Energy Technology Co., Ltd.
Changzhou, Jiangsu 213200 (CN)

(72) Inventors:
• WAN, Ning
hangzhou, Jiangsu 213200 (CN)
• QIN, Xianxian
hangzhou, Jiangsu 213200 (CN)
• ZHANG, Linlin
hangzhou, Jiangsu 213200 (CN)
• LIU, Jing
hangzhou, Jiangsu 213200 (CN)
• SHENG, Jie
hangzhou, Jiangsu 213200 (CN)
• YANG, Hongxin
hangzhou, Jiangsu 213200 (CN)

(74) Representative: Michalski Hüttermann & Partner
Patentanwälte mbB
Kaistraße 16A
40221 Düsseldorf (DE)

(54) **LITHIUM MANGANESE IRON PHOSPHATE COMPOSITE ELECTRODE SHEET, AND PREPARATION METHOD THEREFOR AND USE THEREOF**

(57) The present application relates to the technical field of lithium-ion batteries, relates to a lithium manganese iron phosphate composite electrode sheet, and further discloses a preparation method therefor and use thereof. The lithium manganese iron phosphate composite electrode sheet of the present disclosure forms a double-coating structure by means of a lithium manganese iron phosphate material layer and a carbon-coated lithium iron phosphate material layer which are compositely arranged, wherein an upper coating is the carbon-coated lithium iron phosphate material layer, which can better improve the overall ion mobility of a composite lithium manganese iron phosphate system and optimize the dynamic performance, and a lower coating is a nano lithium manganese iron phosphate material layer, which not only reduces direct contact between an electrolyte and a material surface, thus reducing side reactions, but also provides a voltage platform for manganese, thereby increasing an average voltage platform of the material and obtaining a higher energy density.

**FIG. 1**

Processed by Luminess, 75001 PARIS (FR)

EP 4 746 066 A1

**Description**

**CROSS REFERENCE TO THE RELATED APPLICATIONS**

The present disclosure claims priority to Chinese Patent Application No. 202310870083.9, filed with the China National Intellectual Property Administration on July 14, 2023, and entitled "LITHIUM MANGANESE IRON PHOSPHATE COMPOSITE ELECTRODE SHEET AND PREPARATION METHOD THEREFOR AND USE THEREOF", which is incorporated herein by reference in entirety.

**TECHNICAL FIELD**

The present disclosure belongs to the technical field of lithium-ion batteries, and relates to a lithium manganese iron phosphate composite electrode sheet, and further discloses a preparation method therefor and a use thereof.

**BACKGROUND ART**

Lithium-ion batteries are widely used energy storage devices in energy storage field, power batteries, and portable electronic equipment. Lithium-ion batteries have advantages such as high operating voltage, low self-discharge, and good safety. Lithium-ion batteries mainly consist of positive electrode materials, negative electrode materials, electrolytes, separator, and casing. The positive electrode materials mainly include lithium cobalt oxide, lithium manganese oxide, nickel-manganese binary systems, nickel-cobalt-manganese ternary systems, nickel-cobalt-aluminum ternary systems, lithium iron phosphate, lithium manganese iron phosphate, etc. Lithium iron phosphate ($LiFePO_4$) has advantages such as low cost, high safety, and good cycling life, making it a prevalent positive electrode material in the art.

Lithium manganese iron phosphate (LMFP, $LiMn_{1-x}Fe_xPO_4$) is a material developed based on modified lithium iron phosphate, and it is a solid solution material composed of lithium iron phosphate and lithium manganese phosphate. Lithium manganese iron phosphate has properties similar to lithium iron phosphate and lithium manganese phosphate, exhibiting excellent thermal stability and chemical stability. In addition, compared to lithium iron phosphate, lithium manganese iron phosphate has a higher voltage plateau, and the electrical conductivity and lithium-ion conductivity thereof are improved compared with lithium manganese phosphate, making it a promising positive electrode material. However, single lithium manganese iron phosphate material exhibits poor conductivity; pure lithium manganese iron phosphate is almost an insulator, making it difficult to fully exert electrochemical performances thereof.

Currently, a composite method based on lithium manganese iron phosphate and lithium iron phosphate is a solution for composite molding of lithium manganese iron phosphate and lithium iron phosphate. Lithium iron phosphate powder, as an additive for enhancing compaction, is frequently added to lithium manganese iron phosphate for composite use. With continuous development of technology, requirements for a preparation process of the composite method of lithium manganese iron phosphate and lithium iron phosphate are becoming increasingly stringent. Existing composite methods of lithium manganese iron phosphate and lithium iron phosphate suffer from certain drawbacks in practical use. Due to the large and small particle size distribution of lithium iron phosphate materials, they are difficult to combine effectively with lithium manganese iron phosphate, resulting in low cycling life, low compaction density, and inadequate composite processing, ultimately impacting application performance and user experience.

**SUMMARY**

Therefore, the technical problem to be solved by the present disclosure is to provide a lithium manganese iron phosphate composite electrode sheet, wherein the lithium manganese iron phosphate composite electrode sheet is based directly on a double-coating structure by means of lithium manganese iron phosphate and lithium iron phosphate, effectively improving electrochemical performance thereof.

The second technical problem to be solved by the present disclosure is to provide a preparation method for the above-mentioned lithium manganese iron phosphate composite electrode sheet.

To address the above-mentioned technical problems, the lithium manganese iron phosphate composite electrode sheet provided by the present disclosure includes a lithium manganese iron phosphate material layer and a lithium iron phosphate material layer sequentially arranged on a surface of a current collector;

a maximum compaction density U of the lithium manganese iron phosphate composite electrode sheet satisfies following relationship:

$$U=1.02+0.065S_1*D_1+0.0086S_2*D_2; \text{'}$$

wherein,

$S_1$ and $D_1$ are, respectively, an areal density of the lithium iron phosphate material layer and a median particle size $D_{50}$ of a lithium iron phosphate material forming the lithium iron phosphate material layer; and

$S_2$ and $D_2$ are, respectively, an areal density of the lithium manganese iron phosphate material layer and a median particle size $D_{50}$ of a nano lithium manganese iron phosphate material forming the lithium manganese iron phosphate material layer.

Specifically, for the lithium manganese iron phosphate composite electrode sheet:

in the lithium manganese iron phosphate composite electrode sheet, a mass ratio of the nano lithium manganese iron phosphate material to the lithium iron phosphate material is (1-x): (x), wherein, $1 \leq x \leq 4$;

optionally, a compaction density of the lithium manganese iron phosphate composite electrode sheet is greater than 2.00 g/cc; and

optionally, the compaction density of the lithium manganese iron phosphate composite electrode sheet is 2.00-2.60 g/cc; specifically, the compaction density of the lithium manganese iron phosphate composite electrode sheet can be 2.00 g/cc, 2.10 g/cc, 2.20 g/cc, 2.30 g/cc, 2.40 g/cc, 2.50 g/cc, or 2.60 g/cc.

Specifically, for the lithium manganese iron phosphate composite electrode sheet:

the areal density $S_1$ of the lithium iron phosphate material layer is 18-20 $g/m^2$, such as: 18 $g/m^2$, 18.5 $g/m^2$, 19 $g/m^2$, 19.5 $g/m^2$, or 20 $g/m^2$; and/or,

the areal density $S_2$ of the lithium manganese iron phosphate material layer is 15-18 $g/m^2$, such as: 15 $g/m^2$, 16 $g/m^2$, 17 $g/m^2$, or 18 $g/m^2$.

Specifically, for the lithium manganese iron phosphate composite electrode sheet:

the median particle size $D_{50}$ of the nano lithium manganese iron phosphate material forming the lithium manganese iron phosphate material layer is 0.4-0.6 $\mu$m; such as: 0.4 $\mu$m, 0.45 $\mu$m, 0.5 $\mu$m, 0.55 $\mu$m, or 0.6 $\mu$m; and/or,

the median particle size $D_{50}$ of the lithium iron phosphate material forming the lithium iron phosphate material layer is 0.8-1.2 $\mu$m, such as: 0.8 $\mu$m, 0.9 $\mu$m, 1.0 $\mu$m, 1.1 $\mu$m, or 1.2 $\mu$m.

Specifically, for the lithium manganese iron phosphate composite electrode sheet:

a specific surface area of the nano lithium manganese iron phosphate material is 18-20 $m^2/g$; such as: 18 $m^2/g$, 18.5 $m^2/g$, 19 $m^2/g$, 19.5 $m^2/g$, or 20 $m^2/g$; and/or,

a grain size of the nano lithium manganese iron phosphate material is 75-85 nm, such as: 75 nm, 78 nm, 80 nm, 83 nm, or 85 nm; and/or,

a unit cell volume of the nano lithium manganese iron phosphate material is 290-291 $Å^{\wedge}3$, such as: 290 $Å^{\wedge}3$, 290.2 $Å^{\wedge}3$, 290.5 $Å^{\wedge}3$, 290.8 $Å^{\wedge}3$, or 291 $Å^{\wedge}3$; and/or,

a compaction density (under 2T pressure) of the nano lithium manganese iron phosphate material is 2.1-2.3 g/cc, for example: 2.10 g/cc, 2.15 g/cc, 2.20 g/cc, etc. g/cc, 2.25 g/cc or 2.30 g/cc; and/or,

a tap density of the nano lithium manganese iron phosphate material is 1.0-1.2 $g/cm^3$, such as: 1.0 $g/cm^3$, 1.05 $g/cm^3$, 1.1 $g/cm^3$, 1.15 $g/cm^3$, or 1.2 $g/cm^3$.

Specifically, in the lithium manganese iron phosphate composite electrode sheet, the lithium iron phosphate material is a carbon-coated lithium iron phosphate material.

Optionally, a mass content of a carbon element in the carbon-coated lithium iron phosphate material is 1.2-1.4 wt%.

The present disclosure further discloses a preparation method for the lithium manganese iron phosphate composite electrode sheet, including following steps:

(1) mixing the nano lithium manganese iron phosphate material, a conductive agent, and a binder, and coating the mixture on a surface of the current collector to form a lithium manganese iron phosphate material layer;

(2) dispersing the lithium iron phosphate material in an organic solvent to obtain a suspension, and then wet-coating the suspension onto a surface of the lithium manganese iron phosphate material layer to form a lithium iron phosphate material layer; and

(3) subjecting the treated electrode sheet to a rolling treatment to obtain a desired lithium manganese iron phosphate composite electrode sheet.

Specifically, for the preparation method for the lithium manganese iron phosphate composite electrode sheet:

in step (1), the current collector includes a carbon-coated aluminum foil; optionally, a thickness of the carbon-coated aluminum foil ranges from 12-16 $\mu$m; such as: 12 $\mu$ m, 13 $\mu$m, 14 $\mu$m, 15 $\mu$m, or 16 $\mu$m, and/or,
in step (1), the conductive agent includes at least one selected from the group consisting of acetylene black, Ketjen black, carbon nanotubes (CNTs), 350 G or carbon fiber (VGCF); and/or,
in step (1), the binder includes polyvinylidene fluoride (PVDF); and/or,
in step (1), a mass ratio of the nano lithium manganese iron phosphate material, the conductive agent and the binder is 95.5-96.5 : 1.5-2.5 : 2; and/or,
in step (1), a coating speed of the coating step is 5-10 m/min; and/or,
in step (2), the organic solvent includes n-hexane and/or isopropanol; and/or,
in step (2), the step further includes dispersing the carbon-coated lithium iron phosphate material into mineral oil and adding ethanol for washing; preferably, the ethanol is anhydrous ethanol, and more preferably, the ethanol is analytical grade (AR, 99.9%); and/or,
in step (3), a speed of the rolling step is 2-3 m/min; and/or,
in step (3), the step further includes subjecting the electrode sheet to a drying step before the rolling step; optionally, an atmosphere of the drying step includes at least one selected from the group consisting of hydrogen, nitrogen, helium, neon, argon, krypton or xenon; and
optionally, a temperature of the drying step is 100-130 °C, such as 100 °C, 115 °C, 120 °C, 125 °C or 130 °C; and a duration of the drying is 2-4 h, such as 2 h, 2.5 h, 3 h, 3.5 h or 4 h.

The present disclosure further discloses a use of the lithium manganese iron phosphate composite electrode sheet, or the lithium manganese iron phosphate composite electrode sheet prepared by the preparation method, in manufacturing a positive electrode sheet of a lithium-ion battery, or in a lithium-ion battery.

The present disclosure further discloses a positive electrode sheet of a lithium-ion battery or a lithium-ion battery, prepared by the lithium manganese iron phosphate composite electrode sheet, or by the lithium manganese iron phosphate composite electrode sheet prepared by the preparation method.

The present disclosure further discloses a positive electrode sheet, wherein the positive electrode sheet includes the lithium manganese iron phosphate composite positive electrode sheet.

The present disclosure further discloses a lithium-ion battery, wherein the lithium-ion battery includes the positive electrode sheet.

The lithium manganese iron phosphate composite electrode sheet of the present disclosure forms a double-coating structure by means of a lithium manganese iron phosphate material layer and a carbon-coated lithium iron phosphate material layer which are compositely arranged, herein, the upper coating is the carbon-coated lithium iron phosphate material layer, which can better improve the overall ion mobility of the composite lithium manganese iron phosphate system and optimize the dynamic performance; the lower coating is a nano lithium manganese iron phosphate material layer, which not only reduces direct contact between an electrolyte and a material surface, thus reducing side reactions, but also provides a voltage plateau for manganese, thereby increasing an average voltage plateau of the material and obtaining a higher energy density.

The lithium manganese iron phosphate composite electrode sheet of the present disclosure forms a unique double-coating structure design, and a full battery prepared based on the lithium manganese iron phosphate composite electrode sheet has a mass energy density of 225 Wh/Kg and a volumetric energy density of 495 Wh/L, representing an energy density increase of approximately 12% compared to commercially available lithium iron phosphate materials. Furthermore, it exhibits >80% capacity retention rate after 2000 high-temperature cycles (2.5-4.35 V, 45 °C, 1C/1C) and >94% capacity retention rate after 30 days of high-temperature storage (55 °C), which is essentially on par with commercially available lithium iron phosphate materials. The lithium manganese iron phosphate composite electrode sheet of the present disclosure has more excellent electrochemical performances.

The lithium manganese iron phosphate composite electrode sheet of the present disclosure forms a double-coating structure. Furthermore, by adjusting parameters of the areal densities and particle sizes of the lithium manganese iron phosphate material layer and the carbon-coated lithium iron phosphate material layer, the maximum compaction density U of the lithium manganese iron phosphate composite electrode sheet is adjusted to satisfy the following relationship: $U = 1.02 + 0.065S_1{}^*D_1 + 0.0086S_2{}^*D_2$; herein, $S_1$ and $D_1$ represent the areal density of the carbon-coated lithium iron phosphate material layer and the median particle size $D_{50}$ of the carbon-coated lithium iron phosphate material, respectively, and $S_2$ and $D_2$ represent the areal density of the lithium manganese iron phosphate material layer and the

median particle size $D_{50}$ of the nano lithium manganese iron phosphate material, respectively. The composite electrode sheet has superior electrochemical performance. In addition, for the lithium manganese iron phosphate composite electrode sheet of the present disclosure, a fitted value C of a compaction density of the lithium manganese iron phosphate composite electrode sheet of the present disclosure, determined based on the above relationship, is very close to the actual measured value. This allows for the controllable preparation of a desired high-compaction-density electrode sheet without the need to conduct compaction density tests on the positive electrode sheet made from the obtained positive electrode material each time, thus saving materials and time.

For the lithium manganese iron phosphate composite electrode sheet of the present disclosure, by further adjusting the median particle size $D_{50}$ and the areal density of the upper and lower coating materials during the preparation process of the composite electrode, the compaction density of the lithium manganese iron phosphate composite electrode sheet can be in an optimal state. In addition, it is necessary to simultaneously take into account the design of coating areal density for both the upper carbon-coated lithium iron phosphate layer and the lower lithium manganese iron phosphate layer. In response to an areal density value being too high, cracks are prone to appear on a surface of the electrode sheet during coating, and strip breakage occurs during rolling, affecting processing.

## BRIEF DESCRIPTION OF THE DRAWINGS

To make the content of the present disclosure easier to understand, the following detailed description is given based on specific examples of the present disclosure and in conjunction with drawings.

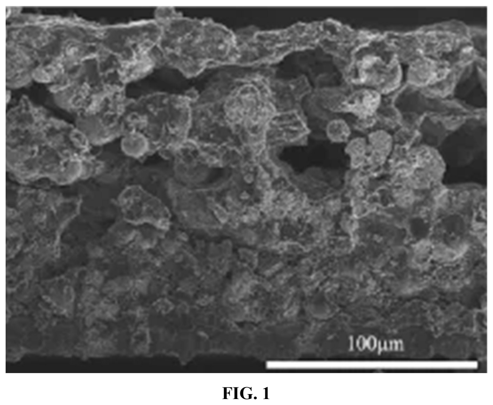

Figure 1 is a scanning electron microscope (SEM) image of the lithium manganese iron phosphate composite electrode sheet of Example 1 of the present disclosure.

## DETAILED DESCRIPTION OF THE EMBODIMENTS

The technical solution of the present disclosure will be further illustrated below through specific embodiments. Those skilled in the art should understand that the embodiments are merely illustrative of the present disclosure and should not be regarded as limitation to the present disclosure.

Example 1

The present example provided a preparation method for the lithium manganese iron phosphate composite electrode sheet, including following steps:

(1) a nano lithium manganese iron phosphate material (average primary particle size of 80 nm), acetylene black and a binder polyvinylidene fluoride (PVDF) were mixed in a mass ratio of 95.5:2.5:2 to yield a homogenate, and the homogenate was coated on a surface of a 12 μm carbon-coated aluminum foil to form the lithium manganese iron phosphate material layer;

(2) a carbon-coated lithium iron phosphate powder (average primary particle size of 400 nm, carbon coating amount of 1.2 wt%, and average thickness of the carbon coating layer of 2 nm) was dispersed in mineral oil using pulsed ultrasound, then a dispersed lithium iron phosphate powder solution was washed and filtered with anhydrous ethanol of analytical grade (AR, 99.9%), and a filtered wet lithium iron phosphate powder was suspended in n-hexane. The suspension in n-hexane was then wet-coated on the surface of the lithium manganese iron phosphate material layer, followed by subjecting to drying treatment in an oven at 100 °C for 2 h under a nitrogen atmosphere to form a carbon-coated lithium iron phosphate material layer; and

(3) the above electrode was subjected to a rolling treatment, with a speed of the rolling controlled at 2 m/min, so that the lithium manganese iron phosphate material layer and the carbon-coated lithium iron phosphate material layer adhered and composited to obtain the desired lithium manganese iron phosphate composite electrode sheet.

For the lithium manganese iron phosphate composite electrode sheet prepared in the present example:

the areal density $S_1$ of the lithium iron phosphate material layer is 18 $g/m^2$; and the median particle size $D_{50}$ (i.e., $D_1$) of the carbon-coated lithium iron phosphate material is 0.8 μm; and

the areal density $S_2$ of the lithium manganese iron phosphate material layer is 15 $g/m^2$; and the median particle size $D_{50}$ (i.e., $D_2$) of the nano lithium manganese iron phosphate material is 0.4 μm.

After calculation, the maximum compaction density U of the lithium manganese iron phosphate composite electrode sheet in the present example is U = $1.02+0.065S_1*D_1+0.0086S_2*D_2$ = 2.0076 g/cc.

After measurement, the compaction density of the lithium manganese iron phosphate composite electrode sheet in the example is 2.0076 g/cc.

The SEM image of the lithium manganese iron phosphate composite electrode sheet in the present example is shown in Figure 1. As can be seen from the SEM image above, the electrode sheet prepared in the present example has a double-coating layer structure with sparse and porous particle distribution, reducing the influence of polarization of a thick electrode sheet. The lower coating is the nano lithium manganese iron phosphate material layer with relatively dense particles, reducing direct contact between the electrolyte and the material surface and playing a role in reducing side reactions.

Example 2

The present example provided a preparation method for the lithium manganese iron phosphate composite electrode sheet, including following steps:

(1) a nano lithium manganese iron phosphate material (average primary particle size of 120 nm), carbon nanotubes (CNTs) and the binder polyvinylidene fluoride (PVDF) were mixed in a mass ratio of 95.5:2.5:2 to yield a homogenate, and the homogenate was coated on a surface of a 13 $\mu$m carbon-coated aluminum foil to form the lithium manganese iron phosphate material layer;

(2) a carbon-coated lithium iron phosphate powder (average primary particle size of 500 nm, carbon coating amount of 1.4 wt%, and average thickness of the carbon coating layer of 4 nm) was dispersed in mineral oil using pulsed ultrasound, then a dispersed lithium iron phosphate powder solution was washed and filtered with anhydrous ethanol of analytical grade (AR, 99.9%), and a filtered wet lithium iron phosphate powder was suspended in n-hexane. The suspension in n-hexane was then wet-coated on the surface of the lithium manganese iron phosphate material layer, followed by subjecting to drying treatment in an oven at 110 °C for 3 h under a nitrogen atmosphere to form a carbon-coated lithium iron phosphate material layer; and

(3) the above electrode was subjected to a rolling treatment, with a speed of the rolling controlled at 3 m/min, so that the lithium manganese iron phosphate material layer and the carbon-coated lithium iron phosphate material layer adhered and composited to obtain the desired lithium manganese iron phosphate composite electrode sheet.

For the lithium manganese iron phosphate composite electrode sheet prepared in the present example:

the areal density $S_1$ of the carbon-coated lithium iron phosphate material layer is 20 g/m$^2$; and the median particle size $D_{50}$ (i.e., $D_1$) of the carbon-coated lithium iron phosphate material is 1.2 $\mu$m; and
the areal density $S_2$ of the lithium manganese iron phosphate material layer is 18 g/m$^2$; and the median particle size $D_{50}$ (i.e., $D_2$) of the nano lithium manganese iron phosphate material is 0.6 $\mu$m.

After calculation, the maximum compaction density U of the lithium manganese iron phosphate composite electrode sheet in the present example is U = $1.02+0.065S_1*D_1+0.0086S_2*D_2$ = 2.67288 g/cc.
After measurement, the compaction density of the lithium manganese iron phosphate composite electrode sheet in the present example is 2.67288 g/cc.

Example 3

The present example provided a preparation method for the lithium manganese iron phosphate composite electrode sheet, including following steps:

(1) a nano lithium manganese iron phosphate material (average primary particle size of 80 nm), carbon fiber (VGCF) and the binder polyvinylidene fluoride (PVDF) were mixed in a mass ratio of 95.5:2.5:2 to yield a homogenate, and the homogenate was coated on a surface of a 14 $\mu$m carbon-coated aluminum foil to form the lithium manganese iron phosphate material layer;

(2) a carbon-coated lithium iron phosphate powder (average primary particle size of 500 nm, carbon coating amount of 1.4 wt%, and average thickness of the carbon coating layer of 2 nm) was dispersed in mineral oil using pulsed ultrasound, then a dispersed lithium iron phosphate powder solution was washed and filtered with anhydrous ethanol of analytical grade (AR, 99.9%), and a filtered wet lithium iron phosphate powder was suspended in n-hexane. The suspension in n-hexane was then wet-coated on the surface of the lithium manganese iron phosphate material layer, followed by subjecting to drying treatment in an oven at 130 °C for 4 h under a nitrogen atmosphere to form a carbon-coated lithium iron phosphate material layer; and

(3) the above electrode was subjected to a rolling treatment, with a speed of the rolling controlled at 3 m/min, so that the lithium manganese iron phosphate material layer and the carbon-coated lithium iron phosphate material layer

# EP 4 746 066 A1

adhered and composited to obtain the desired lithium manganese iron phosphate composite electrode sheet.

For the lithium manganese iron phosphate composite electrode sheet prepared in the present example:

the areal density $S_1$ of the lithium iron phosphate material layer is 18 g/m$^2$; and the median particle size $D_{50}$ (i.e., $D_1$) of the carbon-coated lithium iron phosphate material is 0.8 $\mu$m; and
the areal density $S_2$ of the lithium manganese iron phosphate material layer is 18 g/m$^2$; and the median particle size $D_{50}$ (i.e., $D_2$) of the nano lithium manganese iron phosphate material is 0.4 $\mu$m.

After calculation, the maximum compaction density U of the lithium manganese iron phosphate composite electrode sheet in the present example is U = 1.02+0.065$S_1$*$D_1$+0.0086$S_2$*$D_2$ = 2.01792 g/cc.
After measurement, the compaction density of the lithium manganese iron phosphate composite electrode sheet in the present example is 2.01792 g/cc.

Example 4

The present example provided a preparation method for the lithium manganese iron phosphate composite electrode sheet, including following steps:

(1) a nano lithium manganese iron phosphate material (average primary particle size of 100 nm), acetylene black and the binder polyvinylidene fluoride (PVDF) were mixed in a mass ratio of 95.5:2.5:2 to yield a homogenate, and the homogenate was coated on surfaces of a 16 $\mu$m carbon-coated aluminum foil to form the lithium manganese iron phosphate material layer;
(2) a carbon-coated lithium iron phosphate powder (average primary particle size of 450 nm, carbon coating amount of 1.3 wt%, and average thickness of the carbon coating layer of 3 nm) was dispersed in mineral oil using pulsed ultrasound, then a dispersed lithium iron phosphate powder solution was washed and filtered with anhydrous ethanol of analytical grade (AR, 99.9%), and a filtered wet lithium iron phosphate powder was suspended in n-hexane. The suspension in n-hexane was then wet-coated on the surface of the lithium manganese iron phosphate material layer, followed by subjecting to drying treatment in an oven at 130 °C for 4 h under a nitrogen atmosphere to form a carbon-coated lithium iron phosphate material layer; and
(3) the above electrode was subjected to a rolling treatment, with a speed of the rolling controlled at 2 m/min, so that the lithium manganese iron phosphate material layer and the carbon-coated lithium iron phosphate material layer adhered and composited to obtain the desired lithium manganese iron phosphate composite electrode sheet.

For the lithium manganese iron phosphate composite electrode sheet prepared in the present example:

the areal density $S_1$ of the lithium iron phosphate material layer is 20 g/m$^2$; and the median particle size $D_{50}$ (i.e., $D_1$) of the carbon-coated lithium iron phosphate material is 0.8 $\mu$m; and
the areal density $S_2$ of the lithium manganese iron phosphate material layer is 18 g/m$^2$; and the median particle size $D_{50}$ (i.e., $D_2$) of the nano lithium manganese iron phosphate material is 0.4 $\mu$m.

After calculation, the maximum compaction density U of the lithium manganese iron phosphate composite electrode sheet in the present example is U = 1.02+0.065$S_1$*$D_1$+0.0086$S_2$*$D_2$ = 2.12192 g/cc.
After measurement, the compaction density of the lithium manganese iron phosphate composite electrode sheet in the example is 2.12192 g/cc.

Example 5

The preparation method of the lithium manganese iron phosphate composite electrode sheet in the present example was the same as in Example 1, except that the areal density of the lithium manganese iron phosphate material layer was 17 g/m$^2$, and the areal density of the carbon-coated lithium iron phosphate material layer was 14 g/m$^2$.
After measurement, the compaction density of the lithium manganese iron phosphate composite electrode sheet in the present example is 1.8344 g/cc. Because of the low compaction density of the electrode sheet, a battery core cannot be assembled into a casing, thus failing to meet design requirements.

Example 6

The preparation method of the lithium manganese iron phosphate composite electrode sheet in the present example was the same as in Example 1, except that the areal density of the lithium manganese iron phosphate material layer was 20 g/m$^2$, and the areal density of the carbon-coated lithium iron phosphate material layer was 25 g/m$^2$.

After measurement, the compaction density of the lithium manganese iron phosphate composite electrode sheet in the present example is 2.17736 g/cc. Since the areal densities of both lithium manganese iron phosphate and lithium iron phosphate exceed upper limit, the lower coating of lithium manganese iron phosphate material layer is prone to cracking when a dosage of the binder is 2%, and the upper coating of lithium iron phosphate material layer is also prone to cracking when it is too thick, affecting quality of the electrode sheet.

Example 7

The preparation method of the lithium manganese iron phosphate composite electrode sheet in the present example was the same as in Example 1, except that the median particle size $D_{50}$ (i.e., $D_1$) of the carbon-coated lithium iron phosphate material was 0.6 $\mu$m, and the median particle size $D_{50}$ (i.e., $D_2$) of the nano lithium manganese iron phosphate material was 0.2 $\mu$m.

After measurement, the compaction density of the lithium manganese iron phosphate composite electrode sheet in the present example is 1.7478 g/cc. Since the median particle size ($D_{50}$) of all lithium manganese iron phosphate exceeds the lower limit, the lower coating of lithium manganese iron phosphate material layer is prone to cracking when a dosage of the binder is 2%, affecting quality of the electrode sheet.

Example 8

The preparation method of the lithium manganese iron phosphate composite electrode sheet in the present example was the same as in Example 1, except that the median particle size $D_{50}$ (i.e., $D_1$) of the carbon-coated lithium iron phosphate material was 1.5 $\mu$m, and the median particle size $D_{50}$ (i.e., $D_2$) of the nano lithium manganese iron phosphate material was 0.8 $\mu$m.

After measurement, the compaction density of the lithium manganese iron phosphate composite electrode sheet in the present example is 2.8782g/cc. Since the median particle size ($D_{50}$) of all lithium manganese iron phosphate exceeds the upper limit, large particle pits are easily generated in the upper coating of lithium iron phosphate, causing many defects on the surface of the electrode sheet and affecting quality of the electrode sheet.

Comparative Example 1

An electrode sheet in the present comparative example was coated directly with lithium manganese iron phosphate on a surface of carbon-coated aluminum foil according to the method in Example 1. The electrode sheet was a single-coating structure of lithium manganese iron phosphate.

The electrode sheet in the comparative example is unable to effectively prevent direct contact between an electrolyte and lithium manganese iron phosphate, leading to metal dissolution and structural damage to the lithium manganese iron phosphate, thus affecting quality of the electrode sheet.

Comparative Example 2

The preparation method of the electrode sheet in the present comparative example was the same as in Example 1, except that the nano lithium manganese iron phosphate material and the carbon-coated lithium iron phosphate material were subjected to homogenization treatment and directly coated on the surface of the carbon-coated aluminum foil. The electrode sheet was a single-coating structure including both lithium manganese iron phosphate and carbon-coated lithium iron phosphate.

In the method of the present comparative example, the nano lithium manganese iron phosphate material and the carbon-coated lithium iron phosphate material were subjected to simultaneous homogenization treatment before being coated on an electrode sheet. Some lithium manganese iron phosphate was on the top surface of the electrode sheet, which was unable to effectively prevent direct contact between an electrolyte and lithium manganese iron phosphate, causing metal dissolution, structural damage to the lithium manganese iron phosphate structure, and affecting quality of the electrode sheet. In addition, simultaneous homogenization treatment leads to uneven dispersion of raw materials, resulting in coating cracking, material dropping and other phenomenon on the electrode sheet, seriously affecting quality of the electrode sheet.

Comparative Example 3

The preparation method of the electrode sheet in the present comparative example was the same as in Example 1, except that the carbon-coated lithium iron phosphate material was subjected to homogenization treatment according to the same system as the nano lithium manganese iron phosphate material, and coated on the surface of the lithium manganese iron phosphate material layer. The electrode sheet was a double-coating structure including both lithium manganese iron phosphate and carbon-coated lithium iron phosphate.

In the method of the present comparative example, the lithium iron phosphate material was subjected to homogenization treatment according to the same system formulation and coated on the surface of lithium manganese iron phosphate. On the one hand, simultaneous homogenization treatment leads to uneven dispersion of raw materials; on the other hand, direct coating on the surface of lithium manganese iron phosphate is prone to leading to coating cracking, material dropping and other phenomena, seriously affecting quality of the electrode sheet. This is mainly because in wet coating, evaporation rates of solvents in the upper and lower layers during a drying process are the same, which can cause coating cracking and even material dropping of the electrode sheet.

However, the methods in the above-mentioned examples of the present disclosure can solve the problems of coating cracking and even material dropping of the electrode sheet by controlling inconsistent evaporation rates of two solvents in the upper and lower layers, thus ensuring quality of the electrode sheet.

**Experimental Example**

1. Charge-discharge performance test

The lithium iron phosphate composite electrode sheets prepared in Examples 1-4 above were tested for electrochemical and physicochemical properties thereof (coin-type half-cell, size: 2032, with lithium sheet as the negative electrode) using conventional techniques. The test results are shown in Table 1 below.

Table 1 Physicochemical Property Test Results

| Number | 0.1C - Charging | 0.1C - Discharging | 0.1C - Initial Efficiency | 1C - Discharging | 2C - Discharging |
|---|---|---|---|---|---|
| Example 1 | 160mAh/g | 156mAh/g | 97.5% | 140mAh/g | 135mAh/g |
| Example 2 | 161mAh/g | 156mAh/g | 96.9% | 141mAh/g | 134mAh/g |
| Example 3 | 159mAh/g | 155mAh/g | 97.5% | 139mAh/g | 133mAh/g |
| Example 4 | 161mAh/g | 155mAh/g | 96.3% | 139mAh/g | 134mAh/g |
| Example 5 | 160mAh/g | 156mAh/g | 97.5% | 140mAh/g | 134mAh/g |
| Example 6 | 155mAh/g | 148mAh/g | 95.4% | 130mAh/g | 125mAh/g |
| Example 7 | 152mAh/g | 145mAh/g | 95.3% | 128mAh/g | 122mAh/g |
| Example 8 | 153mAh/g | 144mAh/g | 94.1% | 129mAh/g | 124mAh/g |
| Comparative Example 1 | 145mAh/g | 136mAh/g | 94.1% | 120mAh/g | 105mAh/g |
| Comparative Example 2 | 155mAh/g | 143mAh/g | 92.3% | 131mAh/g | 127mAh/g |
| Comparative Example 3 | 156mAh/g | 143mAh/g | 91.6% | 129mAh/g | 120mAh/g |

As can be seen from the data in Table 1 above, there is no significant difference in the surface state of the electrode sheet in Example 5 compared to the electrode sheets in Examples 1-4, except that the compaction density is relatively low, which does not affect normal performances. However, the electrode sheets in Examples 6-8 have abnormalities such as cracking and material dropping, which prevent normal performances from being exerted. However, Comparative Examples 1-3 suffer from severe structural damage and low performance because they cannot effectively suppress the metal dissolution caused by side reactions between lithium manganese iron phosphate and electrolytes.

2. Discharge capacity test

The lithium manganese iron phosphate composite electrode sheets prepared in Examples 1-6 and Comparative Example 1 were used, respectively. The positive electrode sheets and graphite negative electrode sheets were used to perform full cell assembly verification to test the initial efficiency and the gravimetric capacity performance thereof. The test results are shown in Table 2 below.

Table 2 Discharge Capacity Test Results

| Number | -40°C 1C Discharge capacity (Ah) | -20°C 1C Discharge capacity (Ah) | 25°C 1C Discharge capacity (Ah) | 25°C 2C Discharge capacity (Ah) |
|---|---|---|---|---|
| Example 1 | 37.37 | 56.55 | 56.43 | 52.12 |
| Example 2 | 36.89 | 56.49 | 55.57 | 51.64 |
| Example 3 | 37.07 | 57.12 | 56.24 | 52.47 |
| Example 4 | 37.23 | 56.84 | 56.11 | 52.19 |
| Example 5 | 37.02 | 56.57 | 56.13 | 52.05 |
| Example 6 | 35.15 | 53.38 | 53.75 | 50.22 |
| Example 7 | 34.85 | 53.15 | 52.96 | 50.10 |
| Example 8 | 33.09 | 52.52 | 52.05 | 49.12 |
| Comparative Example 1 | 28.54 | 45.35 | 44.53 | 41.66 |
| Comparative Example 2 | 32.79 | 51.85 | 51.90 | 48.15 |
| Comparative Example 3 | 33.35 | 51.93 | 52.01 | 48.95 |

As can be seen from data in Table 2 above, and from results of Examples 1-4, a battery made of the positive electrode material of the present disclosure can achieve a discharge capacity of over 36.89 Ah at -40 °C 1C, over 56.49 Ah at -20 °C 1C, over 55.57 Ah at 25 °C 1C, and over 51.64 Ah at 25 °C 2C, while performances of the electrode sheets in Comparative Examples 1-3 are significantly worse.

By comparing Example 1 and Examples 5-8, it can be seen that in the lithium manganese iron phosphate composite electrode sheet of the present disclosure, the areal density of the carbon-coated lithium iron phosphate material layer and the areal density of the lithium manganese iron phosphate material layer affect performances thereof. The areal density of the lithium manganese iron phosphate material layer is controlled at 15-18 $g/m^2$ and the areal density of the carbon-coated lithium iron phosphate material layer is controlled at 18-20 $g/m^2$, the performances of the lithium manganese iron phosphate composite electrode sheet are better. In response to the areal density of the carbon-coated lithium iron phosphate material layer and the areal density of the lithium manganese iron phosphate material layer being too high, it inhibits the insertion and extraction of $Li^+$ ions in the lithium manganese iron phosphate and affects the migration rate of $Li^+$ ions. In response to the areal density of the carbon-coated lithium iron phosphate material layer and the areal density of the lithium manganese iron phosphate material layer being too low, it is unable to effectively reduce direct contact between an electrolyte and a material surface during the charging and discharging process, failing to play a role in reducing side reactions.

In summary, the lithium manganese iron phosphate composite electrode sheets of the present disclosure all meet battery-grade requirements, exhibiting excellent rate capability and low-temperature performance, indicating that the lithium manganese iron phosphate composite electrode sheet is suitable for high-energy-density battery systems.

Obviously, the above examples are merely illustrative examples for clear explanation and are not intended to limit embodiments. For those ordinarily skilled in the art, other variations or modifications can further be made based on the above description. It is neither necessary nor possible to exhaustively list all embodiments herein. However, obvious variations or modifications derived therefrom are still within the scope of protection of the present disclosure.

**Claims**

1. A lithium manganese iron phosphate composite electrode sheet, **characterized by** comprising a lithium manganese iron phosphate material layer and a lithium iron phosphate material layer sequentially arranged on a surface of a current collector;

   a maximum compaction density U of the lithium manganese iron phosphate composite electrode sheet satisfies following relationship:

$$U = 1.02 + 0.065 S_1 * D_1 + 0.0086 S_2 * D_2;$$

wherein,

$S_1$ and $D_1$ are an areal density of the lithium iron phosphate material layer and a median particle size $D_{50}$ of a lithium iron phosphate material forming the lithium iron phosphate material layer, respectively;

$S_2$ and $D_2$ are an areal density of the lithium manganese iron phosphate material layer and a median particle size $D_{50}$ of a nano lithium manganese iron phosphate material forming the lithium manganese iron phosphate material layer, respectively; and

the maximum compaction density of the lithium manganese iron phosphate composite electrode sheet is greater than 2.00 g/cc.

2. The lithium manganese iron phosphate composite electrode sheet as claimed in claim 1, **characterized in that**:

in the lithium manganese iron phosphate composite electrode sheet, a mass ratio of the nano lithium manganese iron phosphate material to the lithium iron phosphate material is (1-x): (x), wherein, $1 \leq x \leq 4$; and

preferably, the compaction density of the lithium manganese iron phosphate composite electrode sheet is 2.00-2.60 g/cc.

3. The lithium manganese iron phosphate composite electrode sheet as claimed in claim 1 or 2, **characterized in that**:

the areal density $S_1$ of the lithium iron phosphate material layer is 18-20 $g/m^2$; and/or,

the areal density $S_2$ of the lithium manganese iron phosphate material layer is 15-18 $g/m^2$.

4. The lithium manganese iron phosphate composite electrode sheet as claimed in any one of claims 1 to 3, **characterized in that**:

the median particle size $D_{50}$ of the nano lithium manganese iron phosphate material forming the lithium manganese iron phosphate material layer is 0.4-0.6 $\mu$m; and/or,

the median particle size $D_{50}$ of the lithium iron phosphate material forming the lithium iron phosphate material layer is 0.8-1.2 $\mu$m.

5. The lithium manganese iron phosphate composite electrode sheet as claimed in any one of claims 1 to 4, **characterized in that**:

a specific surface area of the nano lithium manganese iron phosphate material is 18-20 $m^2$/g; and/or,

a grain size of the nano lithium manganese iron phosphate material is 75-85 nm; and/or,

a unit cell volume of the nano lithium manganese iron phosphate material is 290-291 $Å^{3}$; and/or,

a compaction density (under 2T pressure) of the nano lithium manganese iron phosphate material is 2.1-2.3 g/cc; and/or,

a tap density of the nano lithium manganese iron phosphate material is 1.0-1.2 $g/cm^3$.

6. The lithium manganese iron phosphate composite electrode sheet as claimed in any one of claims 1 to 5, **characterized in that** the lithium iron phosphate material is a carbon-coated lithium iron phosphate material; and preferably, a mass content of a carbon element in the carbon-coated lithium iron phosphate material is 1.2-1.4wt%.

7. A preparation method for the lithium manganese iron phosphate composite electrode sheet as claimed in any one of claims 1 to 6, **characterized by** comprising following steps:

(1) mixing the nano lithium manganese iron phosphate material, a conductive agent, and a binder, and coating the mixture on a surface of the current collector to form a lithium manganese iron phosphate material layer;

(2) dispersing the lithium iron phosphate material in an organic solvent to obtain a suspension, and then wet-coating the suspension onto a surface of the lithium manganese iron phosphate material layer to form a lithium iron phosphate material layer; and

(3) subjecting the treated electrode sheet to a rolling treatment to obtain a desired lithium manganese iron phosphate composite electrode sheet.

8. The preparation method for the lithium manganese iron phosphate composite electrode sheet as claimed in claim 7, **characterized in that**:

in step (1), the current collector comprises a carbon-coated aluminum foil; preferably, a thickness of the carbon-coated aluminum foil is 12-16 $\mu$m; and/or,

in step (1), the conductive agent comprises at least one selected from the group consisting of acetylene black, Ketjen black, carbon nanotubes (CNTs), 350 G or carbon fiber (VGCF); and/or,

in step (1), the binder comprises polyvinylidene fluoride (PVDF); and/or,

in step (1), a mass ratio of the nano lithium manganese iron phosphate material, the conductive agent and the binder is 95.5-96.5 : 1.5-2.5 : 2; and/or,

in step (1), a coating speed of a coating step is 5-10 m/min; and/or,

in step (2), the organic solvent comprises n-hexane and/or isopropanol; and/or, in step (2), the step further comprises dispersing the carbon-coated lithium iron phosphate material into mineral oil and adding ethanol for washing; and/or,

in step (3), a speed of a rolling step is 2-3 m/min; and/or,

in step (3), the step further comprises subjecting the electrode sheet to a drying step before the rolling step; preferably, an atmosphere of the drying step comprises at least one selected from the group consisting of hydrogen, nitrogen, helium, neon, argon, krypton or xenon;

preferably, a temperature of the drying is 100-130 °C and a duration of the drying is 2-4 h.

9. Use of the lithium manganese iron phosphate composite electrode sheet as claimed in any one of claims 1 to 6, or the lithium manganese iron phosphate composite electrode sheet prepared by the preparation method as claimed in claim 7 or 8, in preparation of a positive electrode sheet of a lithium-ion battery or a lithium-ion battery.

10. A positive electrode sheet of a lithium-ion battery or a lithium-ion battery prepared by the lithium manganese iron phosphate composite electrode sheet as claimed in any one of claims 1-6, or the lithium manganese iron phosphate composite electrode sheet prepared by the preparation method as claimed in claim 7 or 8.

**FIG. 1**

## INTERNATIONAL SEARCH REPORT

| | |
|---|---|
| International application No. | |
| **PCT/CN2024/105570** | |

**A. CLASSIFICATION OF SUBJECT MATTER**

H01M 4/136(2010.01)i; H01M 4/139(2010.01)i

According to International Patent Classification (IPC) or to both national classification and IPC

**B. FIELDS SEARCHED**

Minimum documentation searched (classification system followed by classification symbols)

IPC: H01M 4/-

Documentation searched other than minimum documentation to the extent that such documents are included in the fields searched

Electronic data base consulted during the international search (name of data base and, where practicable, search terms used)

CJFD, CNTXT, DWPI, ENTXTC, CNKI, ISI_Web of Science: 蜂巢能源, 磷酸锰铁锂, 磷酸铁锰锂, 磷酸铁锂, 层, 压实密度, 面密度, 比表面积, 粒径, 直径, LiMnFePO4, LMFP, LiMn1-xFexPO4, lithium manganese iron phosphate, lithium-manganese-iron phosphate, lithium iron manganese phosphate, LiMnFePO, LFP, LiFePO, LiFePO4, lithium iron phosphate, lithium-iron phosphate, compacte+ density, diameter, specific surface area, layer

**C. DOCUMENTS CONSIDERED TO BE RELEVANT**

| Category* | Citation of document, with indication, where appropriate, of the relevant passages | Relevant to claim No. |
|---|---|---|
| PX | CN 116759540 A (SVOLT ENERGY TECHNOLOGY CO., LTD.) 15 September 2023 (2023-09-15) <br> claims 1-10 | 1-10 |
| Y | CN 115810719 A (CONTEMPORARY AMPEREX TECHNOLOGY CO., LTD.) 17 March 2023 (2023-03-17) <br> description, paragraphs [0124], [0134], [0144], [0163], [0180]-[0183] and [0190], and table 1 | 1-10 |
| Y | CN 114447268 A (TIANNENG SAFT ENERGY CO., LTD.) 06 May 2022 (2022-05-06) <br> description, paragraph [0021] | 1-10 |
| Y | CN 107732201 A (JIANGSU HIGHSTAR BATTERY MANUFACTURING CO., LTD.) 23 February 2018 (2018-02-23) <br> description, paragraph [0018] | 4 |

☑ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 September 2024** | **13 September 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/105570** |

### C. DOCUMENTS CONSIDERED TO BE RELEVANT

| Category* | Citation of document, with indication, where appropriate, of the relevant passages | Relevant to claim No. |
| --- | --- | --- |
| A | CN 109980181 A (INDUSTRIAL TECHNOLOGY RESEARCH INSTITUTE) 05 July 2019 (2019-07-05)<br>entire description | 1-10 |
| A | WO 2019171994 A1 (TORAY INDUSTRIES, INC.) 12 September 2019 (2019-09-12)<br>entire description | 1-10 |

Form PCT/ISA/210 (second sheet) (July 2022)

**INTERNATIONAL SEARCH REPORT**
Information on patent family members

International application No.

**PCT/CN2024/105570**

| Patent document cited in search report | | | Publication date (day/month/year) | Patent family member(s) | | | Publication date (day/month/year) |
|---|---|---|---|---|---|---|---|
| CN | 116759540 | A | 15 September 2023 | None | | | |
| CN | 115810719 | A | 17 March 2023 | WO | 2024093458 | A1 | 10 May 2024 |
| CN | 114447268 | A | 06 May 2022 | None | | | |
| CN | 107732201 | A | 23 February 2018 | CN | 107732201 | B | 08 December 2020 |
| CN | 109980181 | A | 05 July 2019 | JP | 2019149368 | A | 05 September 2019 |
| | | | | TW | 201929298 | A | 16 July 2019 |
| | | | | TWI | 679796 | B | 11 December 2019 |
| | | | | US | 2019198867 | A1 | 27 June 2019 |
| | | | | US | 11228028 | B2 | 18 January 2022 |
| | | | | CN | 109980181 | B | 14 June 2022 |
| | | | | EP | 3671910 | A1 | 24 June 2020 |
| WO | 2019171994 | A1 | 12 September 2019 | JP | 6645621 | B1 | 14 February 2020 |
| | | | | JPWO | 2019171994 | A1 | 16 April 2020 |
| | | | | TW | 201938481 | A | 01 October 2019 |
| | | | | TWI | 782192 | B | 01 November 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310870083